# EUROPÄISCHE PATENTSCHRIFT

(11) **EP 3 437 304 B1**
(45) Veröffentlichungstag und Bekanntmachung des Hinweises auf die Patenterteilung: **15.05.2019**
(21) Anmeldenummer: 17705576.1
(22) Anmeldetag: 10.02.2017
(51) Int. Cl.: H04L 29/08, H04L 29/06

(54) **STEUERVORRICHTUNG UND VERFAHREN ZUM KOORDINIEREN VON KRAFTFAHRZEUG-FUNKTIONSKOMPONENTEN UNTEREINANDER UND/ODER MIT ZUMINDEST EINER FAHRZEUGEXTERNEN FUNKTIONSKOMPONENTE**
CONTROL DEVICE AND METHOD FOR COORDINATING MOTOR VEHICLE FUNCTION COMPONENTS WITH EACH OTHER AND/OR WITH AT LEAST ONE VEHICLE-EXTERNAL FUNCTION COMPONENT
DISPOSITIF DE COMMANDE ET PROCÉDÉ DE COORDINATION DE COMPOSANTS FONCTIONNELS DE VÉHICULE AUTOMOBILE ENTRE EUX ET/OU AVEC AU MOINS UN COMPOSANT FONCTIONNEL EXTÉRIEUR AU VÉHICULE

(30) Priorität: 02.04.2016 DE 102016004032
(43) Veröffentlichungstag der Anmeldung: 06.02.2019
(73) Patentinhaber: Audi AG, 85045 Ingolstadt (DE)
(72) Erfinder: OLDEWURTEL, Frank, 58089 Hagen (DE); ROTTACH, Thomas, 80807 München (DE)
(86) Internationale Anmeldenummer: PCT/EP2017/053006
(87) Internationale Veröffentlichungsnummer: WO 2017/167489

(56) Entgegenhaltungen:
- DE-T5-112012 004 767
- US-A1- 2014 032 015
- Anonymous: "How to Use GPS Location to Make Your House Welcome You Home", , 18. März 2016 (2016-03-18), XP055366643, Gefunden im Internet: URL:https://web.archive.org/web/2016031820 2249/http://www.makeuseof.com/tag/gps-loca tion-house-welcome-home/ [gefunden am 2017-04-24]

## Beschreibung

Die Erfindung betrifft ein Verfahren und eine Steuervorrichtung zum Koordinieren eines Betriebs zumindest einer Funktionskomponente in einem Kraftfahrzeug mit zumindest einer fahrzeugexternen Funktionskomponente. Eine Funktionskomponente in dem Kraftfahrzeug kann beispielsweise dessen Infotainmentsystem (Informations-Unterhaltungssystem) sein. Eine fahrzeugexterne Funktionskomponente kann beispielsweise ein Haushaltsgerät in einem Gebäude sein. Zu der Erfindung gehört auch ein Kraftfahrzeug, welches die erfindungsgemäße Steuervorrichtung aufweist.

Heutzutage wächst die Anzahl an personalisierten Diensten, die dem Nutzer auf Mobiltelefonen zur Verfügung stehen. Bei diesen Diensten kann der Nutzer durch explizite Eingaben für ihn relevante Anpassungen vornehmen und den Dienst damit über eigene Präferenzen personalisieren. Um die steigenden Bedürfnisse des Benutzer nach Komfort, Lifestyle und Sicherheit auch im Fahrzeug zu adressieren, ist es von Bedeutung, dem Benutzer eine Möglichkeit zu schaffen, seinen persönlichen Erlebnisraum zu konfigurieren und zu individualisieren. Der persönliche Erlebnisraum geht dabei über das Mobiltelefon hinaus und betrachtet insbesondere den Benutzer und die Situation, in der er sich befindet, domänenübergreifend. Domänen können dabei z.B. das Kraftfahrzeug und seine Umgebung, das Zuhause, eine Netzwerk-Cloud und das Internet und mobile Endgeräte (sog. Mobile Devices/Wearables), wie z.B. ein Smartphone, eine Smartwatch, sein.

Aus der DE 10 2010 047 411 A1 ist ein Verfahren bekannt, mittels welchem automatisch Empfehlungen für zumindest eine auf eine aktuelle Fahrzeugnutzung abgestimmte Fahrerassistenz-Funktion erstellt werden. Die Empfehlung berücksichtigt dabei das Nutzerverhalten sowie ein Fahrzeug-Nutzungsprofil. Durch das bekannte Verfahren wird lediglich die Benutzung von fahrzeugeigenen Funktionskomponenten auf die aktuelle Situation in dem Kraftfahrzeug abgestimmt. Es werden keine fahrzeugexternen Funktionskomponenten berücksichtigt.

In der DE 10 2013 223 684 A1 ist ein Verfahren zum Geben von Empfehlungen für mehrere Fahrzeuginsassen beschrieben. Diese Empfehlungen berücksichtigen Präferenzinformationen aller Fahrzeuginsassen. Diese Präferenzen können auch durch einen Server gelernt werden, welcher von einer Beobachtungseinheit in dem Kraftfahrzeug über eine Kommunikationseinheit entsprechende Beobachtungsdaten empfängt. Mit diesem Verfahren können also fahrzeugeigene Funktionskomponenten auf die aktuell im Fahrzeug befindlichen Fahrzeuginsassen abgestimmt werden. Hierbei werden die Präferenzen aller Fahrzeuginsassen berücksichtigt. Ein fahrzeugexternes Ereignis beispielsweise in einem Wohngebäude kann nicht bei dem Betrieb der Fahrzeugkomponenten berücksichtigt werden.

In der US 2013 0030 645 A1 ist ein Verfahren zum Betreiben von Funktionskomponenten in einem Kraftfahrzeug beschrieben, das die Funktionskomponenten ebenfalls in Abhängigkeit von den im Fahrzeug aktuell befindlichen Fahrzeuginsassen abstimmt. Hierzu wird eine Profilanalyse der in dem Kraftfahrzeug befindlichen Fahrzeuginsassen durchgeführt. Eine Abstimmung der fahrzeuginternen Funktionskomponenten in Abhängigkeit von Betriebszuständen fahrzeugexterner Funktionskomponenten, wie beispielsweise Haushaltsgeräten in einem Wohnhaus, ist mit dem Verfahren nicht möglich.

Internet publication "How to Use GPS Location to Make Your House Welcome You Home" (2016-03-18), XP055366643, discloses actions related to one's home triggered by a car or telephone.

Die Vernetzung unterschiedlicher Domänen, also beispielsweise der Domäne "Kraftfahrzeug" mit der Domäne "Wohnhaus" oder "Büro" und der Domäne "mobiles Endgerät" ist insofern aufwendig, als dass Zustandsdaten der in den jeweiligen Domänen befindlichen Funktionskomponenten, also beispielsweise des Infotainmentsystems in dem Kraftfahrzeug und der Haushaltsgeräte in einem Wohnhaus, es erforderlich machen, dass die entsprechenden Zustandsdaten mit hoher Datenrate zwischen den Domänen ausgetauscht werden. Ist ein Fahrzeug über eine Mobilfunkverbindung mit dem Internet verbunden, so müsste über diese Mobilfunkverbindung der vollständige Datenverkehr zum Erfassen der jeweiligen Betriebszustände oder Sensordaten von Funktionskomponenten in das Kraftfahrzeug geleitet werden. Beispielsweise müssten also zum Steuern des Infotainmentsystems in Abhängigkeit von Haushaltsgeräten in einem Wohnhaus sämtliche Sensordaten und Zustandsdaten der Haushaltsgeräte über die Mobilfunkverbindung in das Kraftfahrzeug übertragen werden, damit dort die Steuerung des Infotainmentsystems in Abhängigkeit von diesen Daten erfolgen kann. Dies kann die verfügbare Datenrate überfordern. Zudem kann eine Vorverarbeitung in der sendenden Domäne vorteilhaft sein, so dass Daten zumindest teilweise dort verarbeitet werden, wo sie entstehen.

Der Erfindung liegt die Aufgabe zugrunde, Funktionskomponenten in einem Kraftfahrzeug untereinander und/oder mit zumindest einer fahrzeugexternen Funktionskomponente zu koordinieren.

Die Aufgabe wird durch die Gegenstände der unabhängigen Patentansprüche 1 und 10 gelöst. Vorteilhafte Weiterbildungen der Erfindung sind durch die Merkmale der abhängigen Patentansprüche, die folgende Beschreibung sowie die Figuren offenbart.

Durch die Erfindung ist ein Verfahren zum Koordinieren eines Betriebs zumindest einer Funktionskomponente in einem Kraftfahrzeug mit einem Betrieb einer anderen Funktionskomponente des Kraftfahrzeugs und/oder mit einem Betrieb zumindest einer fahrzeugexternen Funktionskomponente bereitgestellt. Allgemein kann eine Funktionskomponente hierbei jeweils insbesondere sein: ein Gerät, ein Sensor, ein Aktuator, eine Applikation, ein Software-Dienst. Die Funktionskomponenten sind zu Gruppen zusammengefasst, die hier als Domänen bezeichnet sind, wobei sich eine Zuordnung einer Funktionskomponente zu einer Domäne aus dem Ort ergibt, wo sich die Funktionskomponente befindet. So ist die zumindest eine Funktionskomponente in dem Kraftfahrzeug in einer fahrzeugeigenen Domäne angeordnet. Jede Domäne weist eine Gatewayeinrichtung auf. Durch die Gatewayeinrichtungen findet eine Kommunikation zwischen den Domänen statt. Die zumindest eine fahrzeugexterne Funktionskomponente ist entsprechend zu zumindest einer fahrzeugexternen Domäne zusammengefasst, wobei jede Domäne eine Gatewayeinrichtung aufweist.

Für jede oder zu jeder Domäne werden Kontextmeldungen erzeugt, die jeweils eine aktuelle in der jeweiligen Domäne stattfindende oder vorliegende Situation beschreiben. Kontextmeldungen sind im Zusammenhang mit der Erfindung Kommunikationsnachrichten zwischen Systemkomponenten. Es handelt sich also nicht um Ausgabenachrichten für einen Benutzer. Jede Kontextmeldung wird dabei gemäß einer jeweiligen vorbestimmten Aggregationsanweisung oder Aggregationsregel aus jeweiligen Sensordaten und/oder Zustandsdaten der zumindest einen Funktionskomponente und/oder aus zumindest einer anderen Kontextmeldung erzeugt. Eine Kontextmeldung kann also im einfachsten Fall die Sensordaten einer Funktionskomponente repräsentieren. Durch Zusammenfassen von Sensordaten mehrerer Funktionskomponenten kann eine im Verhältnis dazu komplexere oder umfangreichere Kontextmeldung erzeugt werden. Des Weiteren kann eine Kontextmeldung durch Verarbeiten von Sensordaten erzeugt werden. Z.B. kann durch eine Spracherkennung ein vordefinierter Sprachbefehl erkannt werden und die erfolgreiche Erkennung als Kontextmeldung signalisiert werden. Es kann auch durch eine Gestenerkennung und/oder Mimikerkennung eine vorbestimmte Gebärde erkannt werden und die erfolgreiche Erkennung als Kontextmeldung signalisiert werden. Eine Kontextmeldung kann auch auf zumindest einer anderen Kontextmeldung basieren, um hierdurch eine Abstrahierung oder Detailierung der Situationsbeschreibung zu erreichen.

Die Domänen senden über ihre jeweilige Gatewayeinrichtung ihre Kontextmeldungen an eine Steuervorrichtung aus. In der Steuervorrichtung liegen somit in Form der Kontextmeldungen Informationen über die jeweiligen in den Domänen stattfindenden oder vorliegenden Situationen vor. Somit ist es also nicht nötig, in der Steuervorrichtung alle Sensordaten als Rohdaten zu sammeln. Stattdessen wird eine abstrahierte Beschreibung der Situation in der Domäne durch die Kontextmeldungen ermöglicht. Dies reduziert in vorteilhafter Weise die benötigte Datenrate. Zusätzlich wird hierdurch in der beschriebenen Weise eine Vorverarbeitung in der jeweils sendenden Domäne durchgeführt, was die Komplexität der Verarbeitung in der Steuervorrichtung reduzieren kann.

In der Steuervorrichtung stellt eine Speichereinrichtung zumindest eine Kontextregel bereit. Jede Kontextregel ist automatisiert erzeugt oder mittels einer Bedieneinrichtung von einem Benutzer definiert. Ein Benutzer kann also eine solche Kontextregel frei festlegen. Durch beobachten von Benutzerverhalten können Kontextregeln auch automatisiert erzeugt werden. Jede Kontextregel sieht zumindest eine jeweilige vorbestimmte Steueranweisung für zumindest eine jeweils vorbestimmte Funktionskomponente einer der Domänen vor. Durch die Steueranweisung wird also zumindest eine Funktionskomponente gesteuert. Es können somit über eine Kontextregel eine Funktionskomponente oder mehrere Funktionskomponenten gesteuert werden und zwar jeweils durch eine Steueranweisung oder mehrere Steueranweisungen.

Die jeweilige zumindest eine Steueranweisung wird aber nur dann an die jeweilige zumindest eine Funktionskomponente ausgesendet, falls zumindest eine vorbestimmte Kontextmeldung durch die Steuervorrichtung ermittelt wird, also aus einer Domänen empfangen oder von der Steuervorrichtung selbst gebildet wird. Die Kontextregel ordnet also zumindest eine Kontextmeldung einer jeweiligen Steueranweisung zu. Die Kontextregel kann insbesondere auch mehrere Kontextmeldungen als Bedingung für das Aussenden der Steueranweisung umfassen. Eine Überwachungseinrichtung der Steuereinrichtung steuert schließlich auf der Grundlage der zumindest einen Kontextregel die jeweils in der Kontextregel angegebene zumindest eine Funktionskomponente. Mit anderen Worten reagiert die Überwachungseinrichtung auf die empfangenen Kontextmeldungen in der Weise, wie es durch die zumindest eine Kontextregel festgelegt oder vorgeschrieben ist.

Durch die Erfindung ergibt sich der Vorteil, dass in der Steuervorrichtung Informationen über die in den mehreren unterschiedlichen Domänen stattfindenden oder vorliegenden Situationen gesammelt werden und domänenübergreifend Funktionskomponenten durch Steueranweisungen gesteuert werden, falls sich anhand der Kontextmeldungen ergibt, dass eine vorbestimmte Situation in einer der Domänen oder in mehreren Domänen eingetreten ist. So kann ein Benutzer beispielsweise in seinem Kraftfahrzeug eine Beleuchtung einschalten lassen, das heißt es wird als Funktionskomponente eine Fahrzeugbeleuchtung durch eine Steueranweisung gesteuert, falls durch eine Kontextmeldung z.B. aus der Domäne "Eigenheim" die Kontextmeldung empfangen wird, dass sich jemand beispielsweise im Haus befindet. Eine entsprechende Kontextmeldung kann dann beispielsweise besagen: "Person im Haus". Hierbei ist es dann nicht nötig, durchgehend die Sensordaten z.B. aller Bewegungsmelder im Haus zu senden. Stattdessen werden die Sensordaten durch eine entsprechende Aggregationsregel in der Domäne "Eigenheim" so weit zusammengefasst, dass lediglich der Zustand oder die Situation "Person im Haus" als eine Kontextmeldung an die Steuervorrichtung ausgesendet wird. Zudem kann der Benutzer mittels der Bedieneinrichtung die Kontextregeln frei festlegen, also die Verknüpfungen, die sich durch die Kontextregel zwischen den Funktionskomponenten ergeben, im Betrieb der Steuervorrichtung verändern. Die Bedieneinrichtung kann z.B. realisiert werden mittels eines Infotainmentsystems des Kraftfahrzeugs und/oder als eine Applikation eines mobilen Endgeräts und/oder als Anwendungsprogramm in einem Personalcomputer (PC).

Zu der Erfindung gehören optionale Weiterbildungen, durch deren Merkmale sich zusätzliche Vorteile ergeben.

Gemäß einer Weiterbildung umfasst die zumindest eine Funktionskomponente der fahrzeugeigenen Domäne zumindest eine der folgenden: ein Infotainmentsystem, ein Sitzsteuergerät, insbesondere mit einem Motor zum Einstellen einer Sitzposition und/oder einem Heizelement, eine Klimatisierungs- und/oder Belüftungseinrichtung, eine Beleuchtungseinrichtung, eine Lokalisierungseinrichtung, eine Navigationseinrichtung. Die besagte Lokalisierungseinrichtung kann beispielsweise auf der Grundlage eines Empfängers für ein Positionssignal eines GNSS (Global Navigation Satellite System), beispielsweise des GPS (Global Positioning System), sein. Eine solche Lokalisierungseinrichtung stellt dann eine Quelle für Sensordaten dar und wird also nicht durch eine Steueranweisung im Rahmen einer Kontextregel gesteuert.

Im Zusammenhang mit der zumindest einen fahrzeugexternen Domäne sieht eine Weiterbildung vor, dass als jeweilige Domäne zumindest eine der folgenden umfasst ist. Ein Gerätenetzwerk eines Gebäudes kann eine Domäne darstellen, die zumindest ein Haushaltsgerät als Funktionskomponente aufweist. Als Haushaltsgerät kann beispielsweise eine Waschmaschine, ein Herd, eine Gebäudesensorik, eine Gebäudebeleuchtung vorgesehen sein. Eine weitere Domäne kann durch ein portables, mobiles Endgerät gebildet sein, welches zumindest ein Anwendungsprogramm als Funktionskomponente aufweist. Hierdurch lässt sich das Endgerät mit den Funktionskomponenten des Kraftfahrzeugs über Kontextregeln verschalten. Eine Domäne kann durch einen Internetbereich gebildet sein, der zumindest einen Internetdienst als Funktionskomponente aufweist. So können beispielsweise Web-Portale von sozialen Netzwerken jeweils eine Funktionskomponente darstellen. Ereignisse in den sozialen Netzwerken werden dann durch Kontextmeldungen an die Steuervorrichtung gemeldet oder signalisiert.

Eine Weiterbildung sieht vor, dass durch jede Gatewayeinrichtung jeder der Domäne die Kontextmeldungen aus der jeweiligen Domäne vor dem Aussenden in ein vorbestimmtes Meldungsformat umgewandelt oder konvertiert werden. Bevorzugt ist das Meldungsformat für alle Gatewayeinrichtungen gleich. Durch das Umwandeln ergibt sich der Vorteil, dass Kontextmeldungen aus einer Domäne unabhängig von dem Herstellerformat für die Kontextmeldungen in der Steuervorrichtung einheitlich in dem Meldungsformat vorliegen. Hiermit ist beim Austauschen oder Installieren einer Funktionskomponente in einer der Domäne keine Anpassung der Steuervorrichtung nötig, um die Kontextmeldungen der neuen Funktionskomponente interpretieren zu können.

Eine Weiterbildung sieht vor, dass die besagten Aggregationsanweisungen zum Bilden der Kontextmeldungen jeweils durch die Gatewayeinrichtung und/oder zumindest eine Funktionskomponente und/oder durch die Steuervorrichtung ausgeführt werden. Durch das Ausführen in einer Funktionskomponente werden also beispielsweise deren eigene Sensordaten bereits zu einer Kontextmeldung zusammengefasst, die zum Übertragen an die Gatewayeinrichtung weniger Datenrate benötigt als die Sensordaten selbst. Die Gatewayeinrichtung kann in vorteilhafter Weise Sensordaten und/oder Kontextmeldungen bündeln und mittels einer Aggregationsanweisung zu einer neuen Kontextmeldung zusammenfassen und steht dabei in vorteilhafter Weise mit allen beteiligten Funktionskomponenten in Kommunikationsverbindung. In der Steuervorrichtung können in vorteilhafter Weise Kontextmeldungen mehrerer Domänen mittels einer Aggregationsanweisung zusammengefasst werden.

Eine Weiterbildung sieht vor, dass die Steuervorrichtung durch eine fahrzeugexterne Servervorrichtung, d.h. einen Server, bereitgestellt wird und hierzu auch die Gatewayeinrichtung der fahrzeugeigenen Domäne ihre Kontextmeldungen aus dieser Domäne an die Steuervorrichtung aussendet. Die Servervorrichtung kann beispielsweise ein Server des Internets sein und beispielsweise auf der Grundlage einer Prozessoreinrichtung, wie beispielsweise eines Computers oder eines Computernetzwerks, gebildet sein. Durch diese Weiterbildung ergibt sich der Vorteil, dass unabhängig von einer aktuellen Funkverbindung zwischen dem Kraftfahrzeug und der Fahrzeugumgebung die Servervorrichtung Kontextmeldungen aus den übrigen Domänen empfangen und mittels ihrer Überwachungseinrichtung überprüfen kann.

Eine Weiterbildung sieht dagegen vor, dass die Steuervorrichtung fahrzeugintern bereitgestellt wird. Hierdurch ergibt sich der Vorteil, dass in dem Kraftfahrzeug Funktionskomponenten zumindest untereinander koordiniert werden können, falls keine Funkverbindung zur Fahrzeugumgebung besteht.

Eine Weiterbildung sieht vor, dass jede Kontextregel jeweils einen Bedingungsteil und einen Aktionsteil aufweist, wobei der Bedingungsteil die zumindest eine Kontextmeldung beschreibt und der Aktionsteil die zumindest eine Steueranweisung beschreibt und wobei der Bedingungsteil und der Aktionsteil zu einer Wenn-Dann-Regel (Wenn Bedingung Dann Aktion) verknüpft sind. Hierdurch kann ein Benutzer mittels der Bedieneinrichtung alle Kontextmeldungen, die berücksichtigt werden sollen, in den Bedingungsteil eintragen und dann in den Aktionsteil die gewünschte Steueranweisung eintragen.

Die Kontextregeln können während eines Betriebs des Kraftfahrzeugs konfiguriert und/oder hinzugefügt und/oder gelöscht werden. Somit können benutzerdefinierte, automatisierte und/oder über eine Fernwartung z.B. von einem Hersteller des Kraftfahrzeugs bereitgestellte Kontextregeln nachgetragen werden oder bestehende Kontextregeln verändert oder entfernt werden. Der Hersteller kann z.B. Kontextregeln anonymisiert analysieren (z.B. eine statistische Häufigkeit ihrer Benutzung) und diese dann als neue Kontextregeln weiteren Benutzer vorschlagen, falls ein vorbestimmtes Nutzungskriterium erfüllt ist.

Zu der Erfindung gehört auch die besagte Steuervorrichtung zum Steuern zumindest einer Funktionskomponente auf der Grundlage zumindest einer Kontextregel. Die Steuervorrichtung weist eine Empfangseinrichtung auf, die dazu eingerichtet ist, von einer jeweiligen Gatewayeinrichtung zumindest einer fahrzeugexternen Domäne Kontextmeldungen, die eine aktuelle, in der jeweiligen Domäne stattfindende Situation beschreiben, sowie Kontextmeldungen aus einem Kraftfahrzeug zu empfangen. Falls die Steuervorrichtung in dem Kraftfahrzeug angeordnet ist, kann die Empfangseinrichtung die Kontextmeldungen aus den fahrzeugexternen Domänen beispielsweise über eine Mobilfunkverbindung oder eine WLAN-Verbindung (WLAN - Wireless Local Area Network) empfangen. Die Kontextmeldungen aus dem Kraftfahrzeug selbst können direkt beispielsweise über einen Fahrzeugbus oder ein Fahrzeug-Datennetzwerk, beispielsweise ein Ethernet, empfangen werden. Falls die Steuervorrichtung außerhalb des Kraftfahrzeugs bereitgestellt ist, kann die Empfangseinrichtung dazu eingerichtet sein, sämtliche Kontextmeldungen über eine Kommunikationsverbindung auf Grundlage eines Kommunikationsprotokolls, z.B. des Internet-Protokolls (IP), zu empfangen.

Die Steuervorrichtung weist des Weiteren eine Speichereinrichtung auf, die dazu eingerichtet ist, zumindest eine Kontextregel bereitzuhalten, die automatisiert erzeugt oder mittels einer Bedieneinrichtung von einem Benutzer definiert ist. Jede Kontextregel sieht in der beschriebenen Weise zumindest eine jeweilige vorbestimmte Steueranweisung für zumindest eine jeweils vorbestimmte Funktionskomponente für den Fall vor, dass zumindest eine vorbestimmte Kontextmeldung durch die Steuervorrichtung empfangen oder selbst mittels einer eigenen Aggregationsanweisung anhand zumindest einer empfangenen Kontextmeldung ermittelt wird. Um diese Kontextregeln umzusetzen, ist eine Überwachungseinrichtung bereitgestellt, die dazu eingerichtet ist, auf der Grundlage der zumindest einen Kontextregel die in der jeweiligen Kontextregel angegebene zumindest eine Funktionskomponente zu steuern.

Für den Fall, dass die Steuervorrichtung in einem Kraftfahrzeug bereitgestellt ist, ergibt sich ein weiterer Aspekt der Erfindung, welcher ein Kraftfahrzeug umfasst, das die Steuervorrichtung gemäß der Erfindung sowie zumindest eine Funktionskomponente aufweist, die zum Empfangen von Steueranweisungen mit der Steuervorrichtung gekoppelt ist.

Im Folgenden sind Ausführungsbeispiele der Erfindung beschrieben. Hierzu zeigt:
- Fig. 1: eine schematische Darstellung mehrerer Domänen mit jeweiligen Funktionskomponenten sowie eine Steuervorrichtung zum Steuern der Funktionskomponenten;
- Fig. 2: eine Skizze zur Veranschaulichung einer logischen Struktur, die durch die Steuervorrichtung und Gatewayeinrichtungen der Domänen gebildet ist;
- Fig. 3: eine Skizze zur Veranschaulichung einer Erzeugung von Kontextmeldungen auf der Grundlage von Aggregationsanweisungen;
- Fig. 4: eine Skizze zur Veranschaulichung eines unterschiedlichen Abstraktionsgrades der Kontextmeldungen;
- Fig. 5: eine schematische Darstellung der Steuervorrichtung und der Gatewayeinrichtungen zum Veranschaulichen einer Kommunikation zwischen diesen;
- Fig. 6: ein Flussschaudiagramm zur Veranschaulichung einer Ausführungsform des erfindungsgemäßen Verfahrens;
- Fig. 7: eine schematische Darstellung zur Veranschaulichung der Erstellung einer Kontextregel;
- Fig. 8: eine schematische Darstellung des Kraftfahrzeugs und einer Domäne "Eigenheim", die mittels einer Kontextregel koordiniert betrieben werden; und
- Fig. 9: eine schematische Darstellung des Kraftfahrzeugs von Fig. 1, bei welchem auf Grundlage einer Kontextregel eine Fahrzeugkomponente gesteuert wird.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

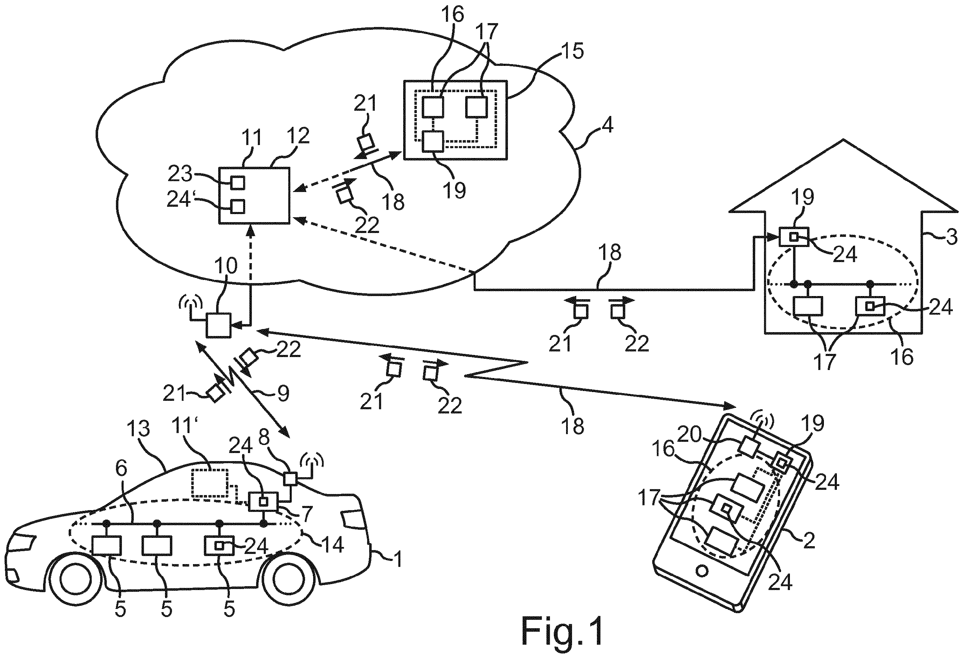

In Fig. 1 sind ein Kraftfahrzeug 1 eines Benutzers, ein mobiles, portables Endgerät 2, beispielsweise ein Smartphone, ein Wohngebäude 3, das beispielsweise das Eigenheim des Benutzers sein kann, und das Internet 4 dargestellt. Das Kraftfahrzeug 1 kann mehrere Funktionskomponenten 5 aufweisen, bei denen es sich beispielsweise um ein Infotainmentsystem und/oder eine Klimatisierungseinrichtung und/oder eine Fahrzeugbeleuchtung handeln kann, um nur beispielhaft einige mögliche Funktionskomponenten aufzuzählen. Die Funktionskomponenten 5 können über eine Kommunikationseinrichtung 6, beispielsweise ein Kommunikationsnetzwerk, wie ein Ethernet, oder Bussysteme, wie z.B. CAN-Bus (CAN - Controller Area Network), mit einer Gatewayeinrichtung 7 gekoppelt sein, bei der es sich beispielsweise um ein Steuergerät des Kraftfahrzeugs handeln kann. Das Kraftfahrzeug 1 kann des Weiteren eine Kommunikationseinrichtung 8 aufweisen, bei der es sich beispielsweise um ein Mobilfunkmodul oder ein WLAN-Modul handeln kann. Über eine Funkverbindung 9 kann die Kommunikationseinrichtung 8 Daten mit einem funkbasierten Kommunikationsnetzwerk, wie z.B. einem Mobilfunknetzwerk 10 oder einem WLAN-Netzwerk (WLAN - wireless local area network), austauschen. Hierdurch ist eine Kommunikationsverbindung mit einer Steuervorrichtung 11 bereitgestellt, die in dem in Fig. 1 veranschaulichten Beispiel durch eine Servervorrichtung 12 des Internets 4 gebildet sein kann. Alternativ dazu kann auch als eine fahrzeuginterne Steuervorrichtung 11' beispielsweise durch eine Prozessoreinrichtung 13 des Kraftfahrzeugs 1 bereitgestellt sein.

Gegenüber der jeweiligen Steuervorrichtung 11, 11' kann die Gatewayeinrichtung 7 die Fahrzeugkomponenten 5 als eine Domäne 14 des Kraftfahrzeugs 1 repräsentieren. Das heißt, domänenbezogene Daten werden über die Gatewayeinrichtung 7 zwischen der Steuervorrichtung 11, 11' und den Fahrzeugkomponenten 5 ausgetauscht. Falls die Steuervorrichtung 11' im Kraftfahrzeug 1 angeordnet ist, kann in diesem Fall eine Kommunikation direkt zwischen den Fahrzeugkomponenten 5 und der Steuervorrichtung 11 vorgesehen sein.

In dem Endgerät 2, dem Wohngebäude 3 und in einem Internetbereich 15 des Internets 4 können ebenfalls jeweilige fahrzeugexterne Domänen 16 gebildet sein, welche jeweils Funktionskomponenten 17 umfassen können und die eine jeweilige Kommunikationsverbindung 18 zur Steuervorrichtung 11, 11' durch eine jeweilige Gatewayeinrichtung 19 der jeweiligen Domäne 16 bereitgestellt bekommen. Bei dem Endgerät 2 können die Funktionskomponenten 17 beispielsweise jeweils durch ein Applikationsprogramm des Endgeräts 2 gebildet sein. Bei dem Wohngebäude 3 können die Funktionskomponenten 17 beispielsweise durch jeweilige Haushaltsgeräte und/oder Gebäudesensoren gebildet sein. Bei dem Internetbereich 15 können die Funktionskomponenten 17 beispielsweise durch jeweilige Internetdienste, beispielsweise Internetportale, gebildet sein.

Die Gatewayeinrichtung 19 des mobilen Endgeräts 2 kann beispielsweise durch ein Programmmodul gebildet sein, das die Kommunikationsverbindung 18 über ein Funkmodul 20 des Endgeräts 2 bereitstellt. Die Gatewayeinrichtung 19 des Wohngebäudes 3 kann beispielsweise ein Mikrocontroller oder Personalcomputer sein, welcher beispielsweise über eine Festnetzleitung die Kommunikationsverbindung 18 zu der Steuervorrichtung 11 bereitstellt und gegebenenfalls die Funkverbindung 9 zum Bereitstellen einer Kommunikationsverbindung mit der fahrzeuginternen Steuervorrichtung 11' nutzen kann. Die Gatewayeinrichtung 19 des Internetbereichs 15 kann beispielsweise auf der Grundlage eines Servercomputers gebildet sein.

Im Folgenden wird davon ausgegangen, dass die Steuervorrichtung 11 als Servervorrichtung 12 im Internet 4 bereitgestellt ist. Über die Kommunikationsverbindungen 9, 18 werden durch die jeweiligen Gatewayeinrichtungen 7, 19 der Domänen 14, 16 jeweils Kontextmeldungen 21 an die Steuervorrichtung 11 gesendet. Durch jede Kontextmeldung 21 wird ein jeweiliger Zustand oder Zustandswechsel in der jeweiligen Domäne 14, 16 angezeigt oder signalisiert, das heißt es wird die aktuelle Situation der jeweiligen Domäne beschrieben. Die Steuervorrichtung 11 sendet in Reaktion auf Kontextmeldungen 21 Steueranweisungen 22 an einzelne der Funktionskomponenten 5, 17 aus. Welche Steueranweisung 22 in Abhängigkeit von welcher Kontextmeldung 21 durch die Steuervorrichtung 11 ausgesendet wird, wird durch jeweilige Kontextregeln 23 bestimmt. Die Kontextmeldungen 21 können direkt Sensordaten von jeweiligen Sensoren der Funktionskomponenten 5, 17 umfassen oder enthalten. Des Weiteren können die Kontextmeldungen 21 aber auch schon zusammengefasste oder aggregierte Inhalte oder Meldungen sein, die durch jeweilige Aggregationsregeln 24 durch die Funktionskomponenten 17 selbst oder die Gatewayeinrichtungen 19 gebildet sein können. Des Weiteren können weitere Aggregationsregeln 24' zur weiteren Zusammenfassung von Kontextmeldungen 21 in der Steuervorrichtung 11 vorgesehen sein.

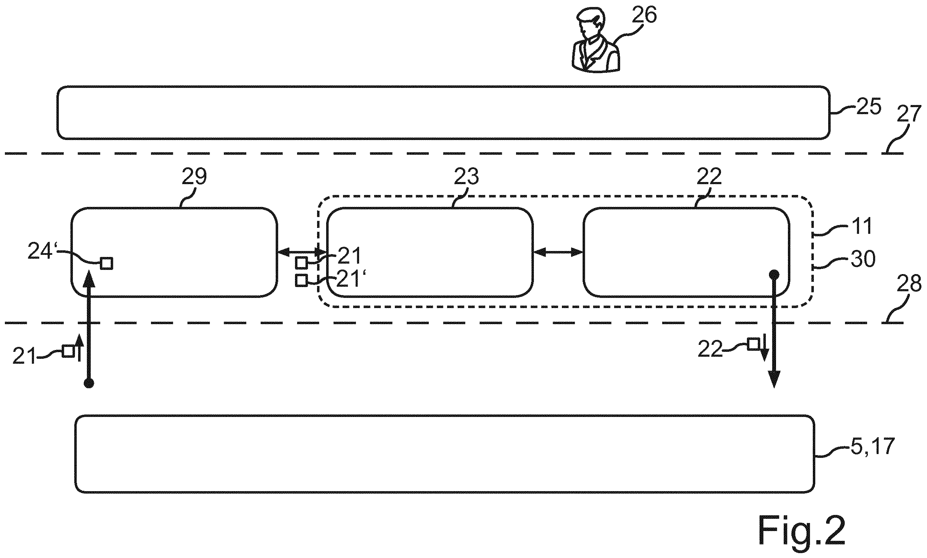

Fig. 2 veranschaulicht, wie mittels einer Bedieneinrichtung 25 ein Benutzer 26 die Steuervorrichtung 11 über eine Bedienschnittstelle 27 bedienen kann. Die Bedieneinrichtung 25 kann beispielsweise mittels eines Infotainmentsystems des Kraftfahrzeugs 1 und/oder eine Anwendungsprogramm des Endgeräts 2 realisiert oder bereitgestellt sein. Der Benutzer 26 kann hierüber Kontextregen 23 eingeben. An den Funktionskomponenten 5, 17 ist eine Kommunikationsschnittstelle 28 realisiert, mittels welcher die Sensordaten und/oder Zustandsdaten als Kontextmeldungen 21 für eine Kontextaggregation 29 auf Grundlage der Aggregationsanweisungen 24, 24' zusammengeführt werden können. Durch eine Überwachungseinrichtung 30 der Steuervorrichtung 11 können dann anhand der Kontextmeldungen 21 aus den Domänen 14, 16 sowie weiterer Kontextmeldungen 21', wie sie in der Steuervorrichtung 11 mittels der Aggregationsanweisungen 24' erzeugt werden, die Kontextregeln 23 umgesetzt werden. Bei Erfüllung einer in der jeweiligen Kontextregel 23 angegebenen Bedingung für die Kontextmeldungen 21, 21' kann durch die Überwachungseinrichtung 30 eine Benachrichtigung und Automatisierung auf der Grundlage der jeweiligen Steueranweisung 22 der Kontextregel 23 realisiert werden.

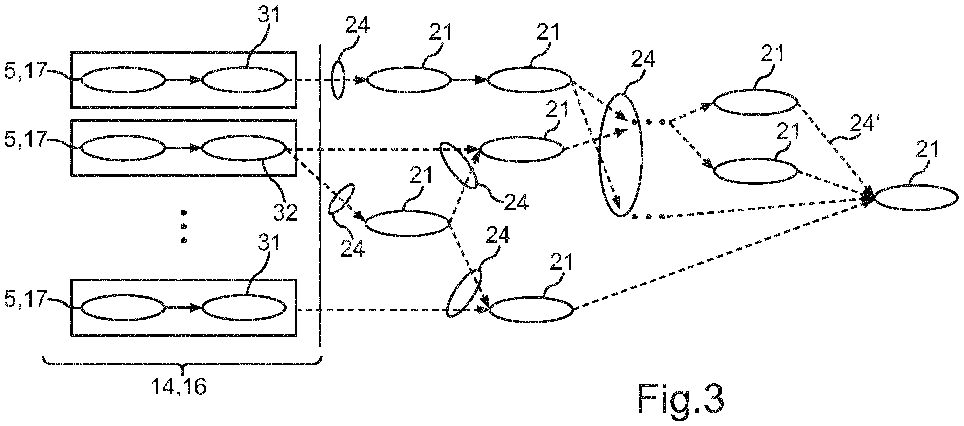

Fig. 3 veranschaulicht, wie jede Funktionskomponente 5, 17 in Bezug auf die Kommunikationsschnittstelle 28 ansteuerbar gemacht wird. Über die im Fig. 3 veranschaulichte Kommunikationsschnittstelle 28 für Funktionskomponenten wird mittels Nachrichten wie "Status" (Beschreibung des Zustands der Funktionskomponente), "Info" (Registrierung der Funktionskomponenten bei der Steuervorrichtung 11 und/oder eines Gateways 19) und "Befehl" (zur Ausführung von Steuerweisungen 22) mit an angebundenen Funktionskomponenten über die Domänen 14, 16 hinweg kommuniziert. Die zu einer Funktionskomponente zugehörige Datenstruktur wird im Folgenden betrachtet. Eine Funktionskomponente trägt Information über sich selbst und den Status (aktueller Zustand) in dem es sich befindet. Eine Funktionskomponente 5, 17 ist z.B. ein Lichtschalter, eine Lautstärkeregelung, Restreichweitenberechnung, Distanzberechnung zum Ziel. Die Datenstruktur hierfür kann z.B. sein: der Name der Funktionskomponente; das Thema; der Datentyp; eine Angabe "Sensor"/"Aktuator"/"Sonstiges"; Metadaten und gegebenenfalls weitere Attribute.

Fig. 3 veranschaulicht, wie Zustandsdaten und/oder Sensordaten 31 aus den einzelnen Funktionskomponenten 5, 17 mittels der Aggregationsregeln 24, 24' aufbereitet werden und so die Kontextmeldungen 21 von einer Vielzahl an hetrogenen Datenquellen abhängen können. Dies kann über das Auslesen von Funktionskomponenten 5, 17, wie z.B. Sensoren und/oder Aktoren und/oder einer Applikation erfolgen. Die Aufbereitung der verschiedenen Daten resultiert in der Abbildung auf diskrete Datentypen, die über eine Programmiersprache verarbeitet werden können.

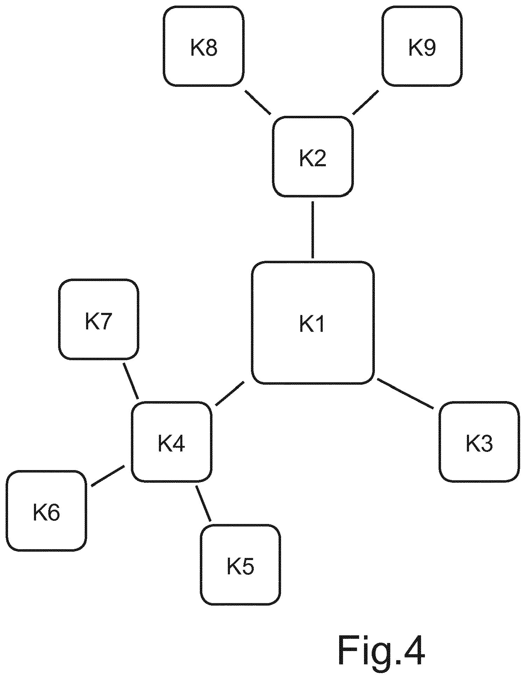

Fig. 4 veranschaulicht, wie über die Verarbeitung und Kombination der Zustandsdaten und/oder Sensordaten 31 und der Kontextmeldungen 21 untereinander Kontexte K1 bis K9 erzeugt werden. Schrittweise werden dabei die Rohdaten (Zustandsdaten und/oder Sensordaten 31) mehr und mehr angereichert oder abstrahiert und so eine semantisch höherwertige Repräsentation erzeugt, die jeweils durch eine Kontextmeldung 21 signalisiert werden kann.

Die hierarchische Struktur gemäß Fig. 4 zur Erzeugung höherwertiger (komplexerer) Kontexte zeigt, wie der höherwertige Kontext K1 durch Anreicherung mit niederwertigeren Kontexten K2, K3, K4 erzeugt wird. Dies lässt sich somit formal mittels einer Aggregationsanweisung 24, 24' beschreiben. Dabei entspricht ein Kontext K1-K9 z.B. einer bestimmten Situation, die relevant ist und auf die somit reagiert werden soll. Kontexte K1-K9 können z.B. "Fahrt zum Ort X", "Ankunft am Zielort oder in der Nähe von y", "Parkvorgang eingeleitet", "Restreichweite zu gering" sein. Die Verwendung von semantisch höherwertigen Kontexten (die aus anderen Kontextmeldungen gebildet sind) wird mit ansteigendem Abstraktionsgrad immer einfacher für die Steuervorrichtung. Relevante Kontexte können in Kontextregeln 23 vorgegeben werden oder alternativ über Verfahren und Algorithmen aus dem Bereich Machine-Learning automatisch erlernt werden, die dann wieder automatisiert Kontextregeln 23 erzeugen.

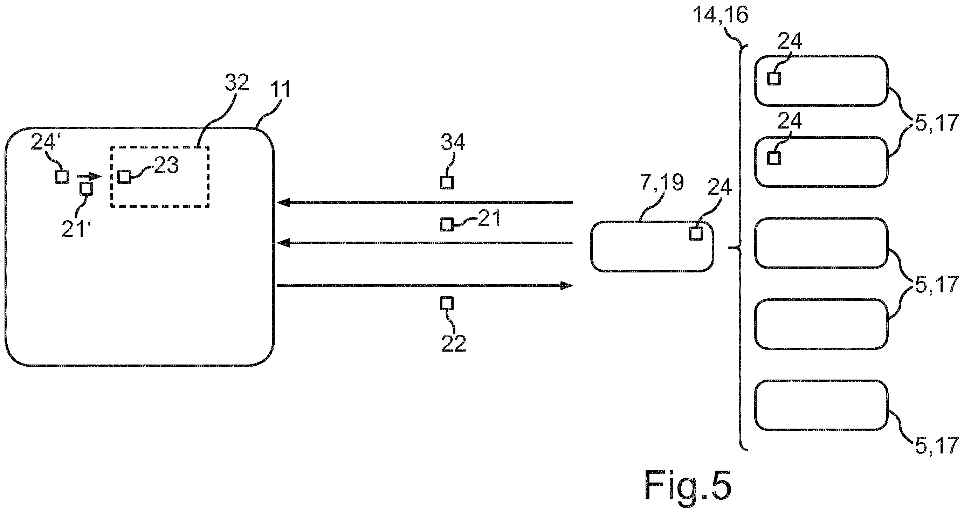

Fig. 5 veranschaulicht den sich ergebenden Zusammenhang zwischen der Steuervorrichtung 11 und den einzelnen Funktionskomponenten 5, 17. In einer Speichereinrichtung 32 der Steuervorrichtung 11 sind die mittels der Bedieneinrichtung 25 festgelegten Kontextregeln 23 bereitgestellt. Auf Grundlage der Aggregationsanweisungen 24, 24' werden aus den Zustandsdaten und/oder Sensordaten 31 die Kontextmeldungen 21, 21' generiert, wobei die Kontextmeldungen 21 über die Gateways 7, 19 an die Steuervorrichtung 11 übertragen werden. Damit in der Steuervorrichtung 11 bekannt ist, welche Funktionskomponenten 5, 17 verfügbar sind, können in Bekanntmachungsnachrichten 34 zunächst die in der jeweiligen Domäne 14, 16 verfügbaren Funktionskomponenten 5, 17 in der Steuervorrichtung 11 registriert werden.

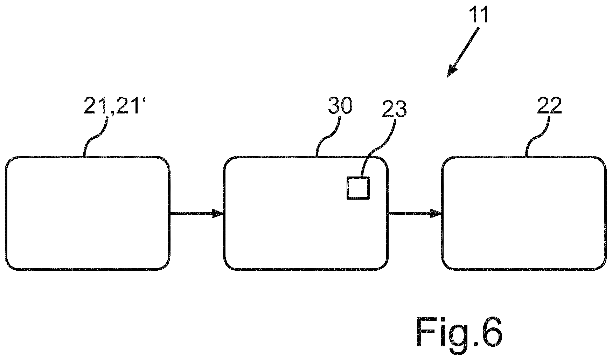

Die Auswertung der Kontextregeln 23 durch die Steuervorrichtung 11 ist in Fig. 6 veranschaulicht. Eine Kontextregel 23 sieht vor, dass für jeden Kontext, der durch eine Kontextmeldung oder mehrere Kontextmeldungen 21, 21' beschreiben ist, eine Folgeaktion als Steueranweisung 22 erzeugt wird. Diese Steueranweisung 22 wird nach Auswertung/Interpretation einer zuvor konfigurierten/erstellten Kontextregel 23 ausgeführt. Ein simples Beispiel einer Kontextregel 23 wäre "WENN Bedingung X, DANN Aktion Y". Die Auswertung erfolgt durch Abprüfen in einer sogenannten Rule-Engine in Form der Überwachungseinrichtung 30, die z.B. ein Programmodul der Steuervorrichtung 11 sein kann.

Damit bildet das System die Basis für das Auslösen von definierten Aktionen zu bestimmen Zeitpunkten nachdem ein bekannter Kontext festgestellt wurde. Ausführung von Aktionen wie z. B. Benachrichtigung, Empfehlung und Automatisierung sowie Interaktion über ein Infotainmentsystem (HMI - Human Machine Interface). Die Ausführung von Folgeaktionen (entsprechend den Steueranweisungen 22) gemäß einer Kontextregel 23 entspricht der Nutzung der erzeugten Kontextinformation. Folgeaktionen können z.B. Benachrichtigungen an den Nutzer, Vorschläge für den Nutzer oder das automatische Aufstarten einer weiteren bislang inaktiven Funktion oder das Verändern von Fahrzeugeinstellungen oder das Ansteuern/Regeln von Aktuatoren wie z.B. eines Garagentors sein. Die Interaktion über das HMI für z.B. Benachrichtigungen kann dann eine Kombination von visuellen, akustischen oder haptischen Elementen sein.

Fig. 5 veranschaulicht in der beschriebenen Weise die Konzeption von domänenspezifischen Adaptern in Form der Gatewayeinrichtungen 7, 19. Die Gatewayeinrichtungen 7, 19 als Adapter ermöglichen die domänenübergreifende Kommunikation von heterogenen Funktionskomponenten 5, 17 miteinander. Funktional passen die Adapter verschiedene Datenstrukturen aneinander an und agieren als Protokollumsetzer. Eine Möglichkeit zur Umsetzung sind z.B. Controller in einem Gateway zu der jeweiligen Domäne. Ziel ist umgangssprachlich, dass die Außenwelt wie z.B. eine SmartHome-Domäne 16 des Wohngebäudes 3 mit der Fahrzeugwelt kommunizieren kann, wobei die proprietäre Kommunikation jeder Domäne über diese Adapter harmonisiert wird.

Es kann auch eine Verwaltung des letzten bekannten Zustands von Funktionskomponenten 5, 17 vorgesehen sein. In jeder Domäne 14, 16 gibt es die Funktionskomponenten 5, 17, von denen jede z.B. ein Lichtschalter, Lautstärke, Restreichweite, Distanz zum Ziel, Sitzbelegung sein kann. Eine Funktionskomponente 5, 17 trägt Information über sich selbst und den Status (aktueller Zustand) in dem es sich befindet. Die Verwaltung des letzten bekannten Zustands einer Funktionskomponente 5, 17 ist wichtig, da dieser zur Kontextermittlung herangezogen wird. Dabei ist es unerheblich in welcher Domäne 14, 16 die Funktionskomponente 5, 17 angesiedelt ist. Weiterhin wird immer der letzte bekannte Zustand verwendet auch wenn sich ein Problemfall, wie z.B. ein Ausfall des Kommunikationsnetzes, einstellt. Für viele Anwendungsfälle ist die Korrektheit im Sinne der eventuellen Konsistenz (siehe das CAP-Theorem für verteilte Systeme aus der Informatik) ausreichend.

Der Kommunikationsmechanismus zwischen den lose gekoppelten Funktionskomponenten 5, 17 wird durch eine Middleware, d.h. eine Message Queue, realisiert, die z.B. in den jeweiligen Gatewayeinrichtungen 7, 17 bereitgestellt sein kann. Diese verbindet alle beteiligen Systemkomponenten miteinander. Es wird bevorzugt eine Technologie auf Basis des Publish/Subscribe-Paradigmas verwendet. Vorteile gegenüber den klassischen Request/Response Verfahren ergeben sich wie folgt:
- Asynchrone/synchrone Kommunikation,
- Server/Dienst muss nicht sofort verfügbar sein,
- Warteschlagen für Nachrichten,
- Meist kürzere Ausführungszeiten,
- Lose Kopplung von Komponenten wie Server und Clients erlauben mehr Flexibilität und Austauschbarkeit,
- Erhöhte Verfügbarkeit des Systems,
- Parallele Verarbeitung von Nachrichten ist möglich.

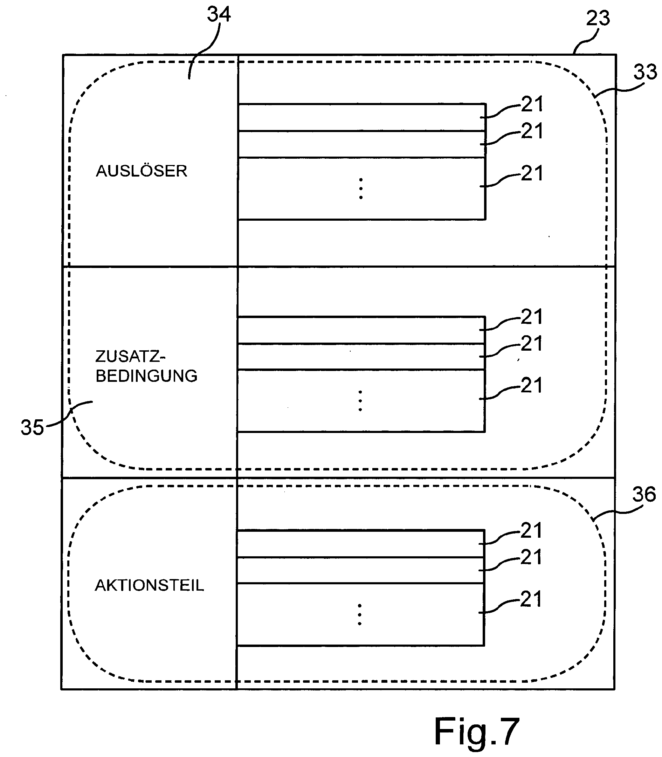

Über die Bedieneinrichtung 25, z.B. in dem Endgerät 2, können sehr einfach und intuitiv eigene Kontextregeln 23, d.h. präferierte Anwendungsfälle, durch den Benutzer 26 umgesetzt werden. Wie Fig. 7 veranschaulicht, besteht eine Kontextregel 23 aus einem Bedingungsteil 33 mit z.B. einem Auslöser 34 (TRIGGER), ggf. einer Zusatzbedingung 35 (CONDITION), und einem Aktionsteil 36 (ACTION), der die Steueranweisungen 22 für eine Aktion (Folgereaktion) festlegt. Bei dem Auslöser 34 sind jeweils Kontextmeldungen 21 als Auswahlmöglichkeiten in den zugehörigen Feldern für die Erstellung einer Kontextregel 23 angegeben. Diese Auswahlmöglichkeiten entsprechen im Bedingungsteil 33 den Kontextmeldungen 21 und im Aktionsteil 36 den Steueranweisungen 22.

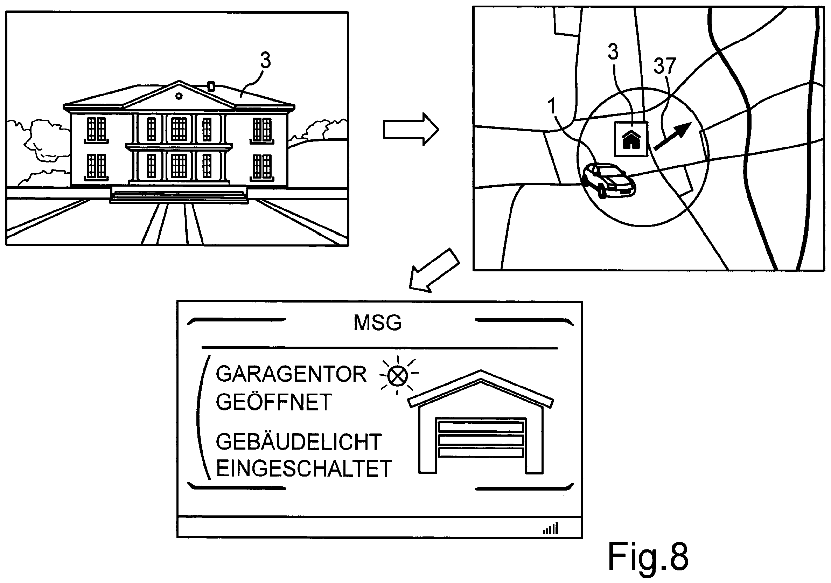

Konzeptionell bildet diese Denkweise eine WENN-DANN-Regel in der Form "WENN Bedingung X, DANN Aktion Y" ab. Ein Beispiel für eine mit der Bedieneinrichtung 25 selbst angelegte Kontextregeln 23 ist in Fig. 8 veranschaulicht: Falls als Kontextmeldung 21 gemeldet wird, dass sich das Kraftfahrzeug 1 näher als eine vorbestimmter Höchstabstand 37 von dem Wohngebäude 3 entfernt befindet (signalisiert durch eine Lokalisierungseinrichtung des Kraftfahrzeugs 1 als Kontextmeldung 21 für den Auslöser 34), so soll als jeweilige Steueranweisung 22 ein Gebäudelicht eingeschaltet werden (LIGHT SWITCHED ON), und das Garagentor geöffnet werden (GARAGE OPENED) und eine Willkommensnachricht MSG im Kraftfahrzeug 1 angezeigt werden. Diese Willkommensnachricht MSG kann beispielsweise besagen: "Willkommen zuhause! Die Hauslichter wurden eingeschaltet, die Garage wurde geöffnet."

Eine Menge an Kontextregeln 23, die einem Benutzer 26 gehören, kann zu einem Regelprofil zusammengefasst werden.

Kontextregeln 23 können alternativ auch über Verfahren und Algorithmen aus dem Bereich Machine-Learning automatisch erlernt werden. Diese könnten dann in einer Liste angegeben werden, wobei der Benutzer 26 einzelne der gelernten Kontextregel 23 an/abwählen kann.

Die Kontextregeln 23 können an unterschiedliche Benutzer 26 verteilt werden. Durch Benutzer 26 erstellte Kontextregeln 23 oder auch automatisch gelernte Kontextregeln 23 können anonymisiert mit dem Server 12 synchronisiert werden. Hierdurch wird eine Auswertung seitens eines Unternehmens hinsichtlich neuer und häufig verwendeter Kontextregeln 23 möglich.

Ausgewählte Kontextregeln 23 können wieder an alle Benutzer 26 verteilt und angeboten werden. Hierzu werden diese in das Fahrzeug 1 gesendet und nach Zustimmung des Benutzers 26 seinem Regelprofil zugeordnet. Dadurch kann auch nach Auslieferung des Fahrzeugs 1 an Benutzer 26 eine Aktualisierung bzw. Verbesserung der Funktionalität erreicht werden. Da Fahrzeuge von mehreren Personen verwendet werden können, ist eine Personalisierung bzw. ein Mehrnutzerkonzept vorgesehen, damit jeder Fahrer sein eignes Regelprofil verwenden kann.

Die Kontextregeln 23 werden im Fahrzeug (unabhängig von Mobilfunknetzen) aber auch synchronisiert im Server 12 (zur Analyse der Regeln durch einen Hersteller für neue Regelvorschläge) betrieben und ausgewertet.

Als ein Beispiel für eine fahrzeugexterne Domäne 16 ist im Folgenden die Integration mit dem SmartHome eines Wohngebäudes 3 beschrieben. Das Gateway 19 ist eine Komponente, die auf der Seite der Domäne 16 liegt. Die Überwachungseinrichtung 30 wird in der Steuervorrichtung 11 betrieben. Dazwischen liegt eine Kommunikationsschnittstelle, wie z.B. eine Middleware z.B. mit einem Publish/Subscribe-Ansatz z.B. auf Basis des MQTT-Protokolls (Message Queue Telemetry Transport). Das Vorgehen ist, dass das spezielle Gateway 19 die Protokollumsetzung betreibt und somit die proprietären Controller für eine spezifische Technologie abstrahiert und so eine vereinheitlichte Kommunikation in die Fahrzeugwelt ermöglicht. Über die Kommunikationsschnittstelle gehen wie zuvor beschrieben die Status-, Infonachrichten (Kontextmeldungen 21) und Befehlsnachrichten (Steueranweisungen 22) bezüglich der verschiedenen Funktionskomponenten 17 des Wohngebäudes 3.

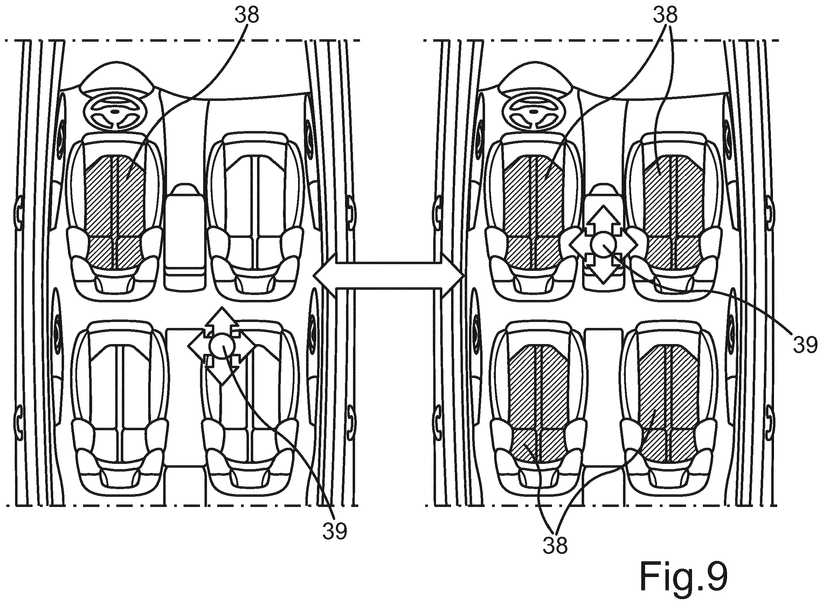

Es sind vielfältige Anwendungsfälle denkbar, die über das beschriebene Verfahren umgesetzt werden können. Hierdurch kann eine personenbezogene und/oder umgebungsbezogene und/oder wetterbezogene Steuerung von Funktionskomponenten 5, 17, die sich im Fahrzeug 1 oder in einer anderen Domäne 16 befinden können, durchgeführt werden. Ein Anwendungsfall kann z.B. die Adaption des Soundfokus an die Sitzbelegung vorsehen, wie dies in Fig. 9 veranschaulicht ist, wo gezeigt ist, wie Sitzbelegungen 38 signalisiert werden und daraufhin über mehrere Lautsprecher ein Klangfokus 39 positioniert wird. Dies ist ein Beispiel für das Koordinieren eines Betriebs von fahrzeugeigenen Funktionskomponenten 5 untereinander.

Ein weiterer Anwendungsfall ist eine automatische Tankempfehlung, wenn die Restreichweite im Vergleich zur Distanz zum geplanten Zielort zu gering ist. Das automatische Einschalten der Sitzheizung, wenn die Außen- oder Innentemperatur einen bestimmten Wert unterschreitet, ist ebenfalls möglich. Dies sind weitere Beispiele für das Koordinieren von fahrzeugeigenen Funktionskomponenten untereinander.

Das Aufschalten einer Meldung für den Benutzer bei Annäherung des Fahrzeugs an vordefinierte, themenbezogene POIs (Points-of-Interest), wie z.B. Restaurants oder Sehenswürdigkeiten, insbesondere entsprechend der Interessensgebiete oder Präferenzen des Benutzers, ist ebenfalls möglich. Die Meldung kann z.B. in Form einer Nachricht im Infotainmentsystem angereichert mit Information über den POI erfolgen (visuell und/oder akustisch und/oder haptisch).

Es kann auch automatisiert eine Verspätungsmeldung über z.B. SMS (short message Service) generiert werden, wenn eine Verspätung zu einem Termin erkannt wird (z.B. durch Abgleich der Fahrzeugposition und des Zielortes).

Dies sind Beispiele einer Koordination von fahrzeugeigenen und fahrzeugexternen Funktionskomponenten miteinander.

Die Ausführungen von gewünschten Aktionen können somit zum richtigen Zeitpunkt erfolgen. Es ergibt sich eine Erleichterung für den Benutzer, da das Fahrzeug seine Aufgaben übernimmt, indem eine automatische Auslösung von Aktionen passend zum aktuellen Kontext erfolgt.

Der Benutzer ist immer informiert und kann aus dem Fahrzeug heraus komfortabel handeln. Die Benachrichtigung des Benutzers kann mit gezielten Empfehlungen auf Basis der Benutzerpräferenzen erfolgen.

Über eigene Kontextregeln kann der Benutzer das gewünschte Verhalten selbst bestimmen. Das Systemverhalten ist durch den Benutzer nachvollziehbar. Eine Auswahl der Regeln ist aus vorgegebener Liste oder durch intuitive Erstellung eigener Regeln (über die Bedieneinrichtung 25) möglich. Automatisches Erlernen von Regeln über Lernmethoden und Datenanalyse (z.B. über Machine-Learning) ist vor und nach der Auslieferung an den Benutzer möglich. Grundsätzlich kann das Verfahren nur im Fahrzeug 1, nur im Server 12 oder in beidem gleichzeitig mit entsprechender Synchronisation der Regelprofile und Zustände betrieben werden. Ein Vorteil des Betriebs im Fahrzeug 1 ist die Unabhängigkeit von der Mobilfunkverbindung 9 für fahrzeugzentrierte Anwendungsfälle. Ein Vorteil für den Betrieb im Server 12 ist die einfachere Aktualisierung von Funktionsteilen.

Insgesamt zeigt das Beispiel, wie durch die Erfindung ein Verfahren zum Betrieb eines Fahrzeugs, bei dem Zustandswechsel erfolgen, bereitgestellt werden kann.

## Patentansprüche

1. Verfahren zum Koordinieren eines Betriebs zumindest einer Funktionskomponente (5) in einem Kraftfahrzeug (1) mit einem Betrieb einer anderen Funktionskomponente (5) des Kraftfahrzeugs (1) und/oder mit einem Betrieb zumindest einer fahrzeugexternen Funktionskomponente (17), wobei
- die zumindest eine Funktionskomponente (5) in dem Kraftfahrzeug (1) zu einer fahrzeugeigenen Domäne (14) und die zumindest eine fahrzeugexterne Funktionskomponente (17) zu zumindest einer fahrzeugexternen Domäne (16) zusammengefasst sind, und
- für jede Domäne Kontextmeldungen (21, 21') erzeugt werden, wobei jede Kontextmeldung (21, 21') eine aktuelle in den Domänen (14, 16) stattfindende Situation beschreibt und jede Kontextmeldung (21, 21') gemäß einer jeweiligen vorbestimmten Aggregationsanweisung (24, 24') aus jeweiligen Sensordaten (30) und/oder Zustandsdaten (30) zumindest einer Funktionskomponente (5, 17) der Domäne (14, 16) und/oder aus zumindest einer anderen Kontextmeldung (21, 21') erzeugt wird, und
- eine Speichereinrichtung (32) einer Steuervorrichtung (11, 11') zumindest eine automatisiert erzeugte und/oder mittels einer Bedieneinrichtung (25) von einem Benutzer (26) definierte Kontextregel (23) bereitstellt, wobei jede Kontextregel (23) zumindest eine jeweilige vorbestimmte Steueranweisung (22) für eine jeweils vorbestimmte Funktionskomponente (5, 17) einer der Domänen (14, 16) für den Fall vorsieht, dass zumindest eine vorbestimmte Kontextmeldung (21, 21') durch die Steuervorrichtung empfangen oder selbst mittels einer eigenen Aggregationsanweisung (24') anhand zumindest einer empfangenen Kontextmeldung (21) ermittelt wird, und
- eine Überwachungseinrichtung (30) der Steuervorrichtung (11, 11') auf der Grundlage der zumindest einen Kontextregel (23) die jeweils in der Kontextregel (23) angegebene Funktionskomponente (5, 17) steuert,
**dadurch gekennzeichnet, dass**
die Domänen (14, 16) jeweils eine Gatewayeinrichtung (7, 19) aufweisen und über ihre jeweilige Gatewayeinrichtung (7, 19) ihre Kontextmeldungen (21) an die Steuervorrichtung (11, 11') aussenden, und wobei zumindest eine der Kontextmeldungen (21, 21') gemäß einer jeweiligen vorbestimmten Aggregationsanweisung (24, 24') durch Zusammenfassen von Sensordaten (30) mehrerer Funktionskomponenten (5, 17) der jeweiligen Domäne (14, 16) und/oder basierend auf zumindest einer anderen Kontextmeldung (21, 21') erzeugt wird, um eine Abstrahierung oder Detaillierung einer Situationsbeschreibung zu erreichen.

2. Verfahren nach Anspruch 1, wobei die zumindest eine Funktionskomponente (5) der fahrzeugeigenen Domäne (14) zumindest eine der folgenden umfasst: ein Infotainmentsystem, ein Sitzsteuergerät, insbesondere mit einem Motor zum Einstellen einer Sitzposition und/oder einem Heizelement, eine Klimatisierungs- und/oder Belüftungseinrichtung, eine Beleuchtungseinrichtung, eine Lokalisierungseinrichtung, eine Navigationseinrichtung.

3. Verfahren nach einem der vorhergehenden Ansprüche, wobei die zumindest eine fahrzeugexterne Domäne (16) als jeweilige Domäne (16) umfasst:
- ein Gerätenetzwerk eines Gebäudes (3), das zumindest ein Haushaltsgerät als Funktionskomponente (17) aufweist, und/oder
- ein portables, mobiles Endgerät (2), das zumindest ein Anwendungsprogramm als Funktionskomponente (17) aufweist, und/oder
- einen Internetbereich (15), der zumindest einen Internetdienst als Funktionskomponente (17) aufweist.

4. Verfahren nach einem der vorhergehenden Ansprüche, wobei durch jede Gatewayeinrichtung (7, 19) jeder Domäne (14, 16) die Kontextmeldungen (21) aus der jeweiligen Domäne (14, 16) vor dem Aussenden in ein vorbestimmtes Meldungsformat umgewandelt werden.

5. Verfahren nach einem der vorhergehenden Ansprüche, wobei die Aggregationsanweisungen (24, 24') jeweils durch die Gatewayeinrichtung (7, 19) und/oder zumindest eine Funktionskomponente (5, 17) der Domäne (14, 16) und/oder die Steuervorrichtung (11, 11') ausgeführt werden.

6. Verfahren nach einem der vorhergehenden Ansprüche, wobei die Steuervorrichtung (11) durch eine fahrzeugexterne Servervorrichtung (12) bereitgestellt wird und auch die Gatewayeinrichtung (7) der fahrzeugeigenen Domäne (14) Kontextmeldungen (21) aus dieser Domäne (14) an die Steuervorrichtung (11) aussendet.

7. Verfahren nach einem der Ansprüche 1 bis 5, wobei die Steuervorrichtung (11') fahrzeugintern bereitgestellt wird.

8. Verfahren nach einem der vorhergehenden Ansprüche, wobei jede Kontextregel (23) jeweils einen Bedingungsteil (33) und einen Aktionsteil (36) aufweist, wobei der Bedingungsteil (33) die zumindest eine Kontextmeldung (21, 21') beschreibt und der Aktionsteil (36) die zumindest eine Steueranweisung (22) beschreibt und wobei der Bedingungsteil (33) und der Aktionsteil (36) zu einer Wenn-Dann-Regel verknüpft sind.

9. Verfahren nach einem der vorhergehenden Ansprüche, wobei die Kontextregeln (23) während eines Betriebs des Kraftfahrzeugs (1) konfiguriert und/oder hinzugefügt und/oder gelöscht werden.

10. Steuervorrichtung (11, 11') zum Steuern zumindest einer Funktionskomponente (5, 17) auf der Grundlage zumindest einer Kontextregel (23), aufweisend:
- eine Empfangseinrichtung, die dazu eingerichtet ist, von einer jeweiligen Gatewayeinrichtung (19) zumindest einer fahrzeugexternen Domäne (16) Kontextmeldungen (21), die eine aktuelle in der jeweiligen Domäne (16) stattfindende Situation beschreiben, und Kontextmeldungen (21) aus einem Kraftfahrzeug (1) zu empfangen,
- eine Speichereinrichtung (32), die dazu eingerichtet ist, zumindest eine mittels einer Bedieneinrichtung (25) von einem Benutzer (26) definierte und/oder zumindest eine automatisiert erzeugte Kontextregel (23) bereitzuhalten, wobei jede Kontextregel (23) zumindest eine jeweilige vorbestimmte Steueranweisung (22) für eine jeweils vorbestimmte Funktionskomponente (5, 17) einer der Domänen (14, 16) für den Fall vorsieht, dass zumindest eine vorbestimmte Kontextmeldung (21, 21') durch die Steuervorrichtung (11, 11') empfangen oder selbst mittels einer eigenen Aggregationsanweisung (24') anhand zumindest einer empfangenen Kontextmeldung (21) ermittelt wird, und
- eine Überwachungseinrichtung (30), die dazu eingerichtet ist, auf der Grundlage der zumindest einen Kontextregel (23) die in der jeweiligen Kontextregel (23) angegebene Funktionskomponente (5, 17) zu steuern,
**dadurch gekennzeichnet, dass**
die Steuervorrichtung (11, 11') dazu eingerichtet ist, zumindest eine der Kontextmeldungen (21, 21') basierend auf zumindest einer anderen Kontextmeldung (21, 21') zu erzeugen, um eine Abstrahierung oder Detaillierung einer Situationsbeschreibung zu erreichen.

11. Steuervorrichtung (11, 11') nach Anspruch 10, wobei die Steuervorrichtung (11, 11') dazu eingerichtet ist, die zumindest eine Kontextmeldung (21, 21') zu empfangen, welche durch Zusammenfassen von Sensordaten (30) mehrerer Funktionskomponenten (5, 17) in einer der jeweiligen Domänen (14, 16) erzeugt wurde.

12. Kraftfahrzeug (1) mit einer Steuervorrichtung (11') nach Anspruch 10 oder 11 und mit zumindest einer Funktionskomponente (5), wobei die zumindest eine Funktionskomponente (5) mit der Steuervorrichtung (11') gekoppelt ist, um aus der Steuervorrichtung (11') Steueranweisungen (22) zu empfangen.

## Claims

1. Method for controlling an operation of at least one function component (5) in a motor vehicle (1) with an operation of another function component (5) of the motor-vehicle (1) and/or with an operation of at least one vehicle-external function component (17), wherein
- the at least one function component (5) in the motor-vehicle (1) is aggregated to form a vehicle-own domain (14) and the at least one vehicle-external component (17) is aggregated to form a vehicle-external domain (16), and
- for each domain tool messages (21, 21') are generated, wherein each tool message (21, 21') describes a current situation taking place in the domains (14, 16) and each tool message (21, 21') is generated according to a respective predetermined aggregation instruction (24, 24') from respective sensor data (30) and/or status data (30) of at least one function component (5, 17) of the domains (14, 16) and/or from at least one other tool message (21, 21'), and
- a storage device (32) of a control device (11, 11') provides at least one context rule (23) which is automatically generated and/or defined by a user (26) by means of an operating device (25), wherein each context rule (23) specifies at least one respective predetermined control instruction (22) for a respectively predetermined function component (5, 17) of one of the domains (14, 16) for the case that at least one predetermined tool message (21, 21') is received by the control device or is itself determined by means of an own aggregation instruction (24') on the basis of at least one received tool message (21), and
- a monitoring device (30) of the control device (11, 11') on the basis of the at least one context rule (23) which controls function components (5, 17) specified respectively in the context rule (23),
**characterised in that**
the domains (14, 16) include in each case a gateway device (7, 19) and transmit via their respective gateway device (7, 19) their tool messages (21) to the control device (11, 11'), and wherein at least one of the tool messages (21, 21') is generated according to a respective predetermined aggregation instruction (24, 24') by the combining of sensor data (30) of several function components (5, 17) of the respective domains (14, 16) and/or based on at least one other tool message (21, 21'), in order to achieve an abstracting or detailing of a situation description.

2. Method according to claim 1, wherein the at least one function component (5) of the vehicle-own domain (14) comprises at least one of the following: an infotainment system, a seat control device, in particular having a motor for adjusting a seat position and/or a heating element, and air-conditioning and/or ventilation device, a lighting device, a locating device, a navigation device.

3. Method according to any of the preceding claims, wherein the at least one vehicle-external domain (16) as respective domain (16) comprises:
- a device network of a building (3) which includes at least one household device as function component (17), and/or
- a portable, mobile end device (2) which includes at least one application program as function component (17), and/or
- an Internet area (15) which includes at least one Internet service as function component (17).

4. Method according to any of the preceding claims, wherein by means of each gateway device (7, 19) of each domain (14, 16) the tool messages (21) from the respective domain (14, 16) are transformed into a predetermined format prior to the transmission.

5. Method according to any of the preceding claims, wherein the aggregation instructions (24, 24') are carried out respectively by the gateway device (7, 19) and/or at least one function component (5, 17) of the domain (14, 16) and/or the control device (11, 11').

6. Method according to any of the preceding claims, wherein the control device (11) is provided by a vehicle-external server device (12) and also the gateway device (7) of the vehicle-own domain (14) transmits tool messages (21) from this domain (14) to the control device (11).

7. Method according to any of claims 1 to 5, wherein the control device (11') is provided vehicle-internally.

8. Method according to any of the preceding claims, wherein each context rule (23) has in each case one condition part (33) and one action part (36), wherein the condition part (33) describes the at least one tool message (21, 21') and the action part (36) describes the at least one control instruction (22) and wherein the condition part (33) and the action part (36) are combined to form an if-then rule.

9. Method according to any of the preceding claims, wherein the context rules (23) are configured and/or added and/or deleted during an operation of the motor vehicle (1).

10. Control device (11, 11') for controlling at least one function component (5, 17) on the basis of at least one context rule (23), including:
- a reception device which is configured to receive from a respective gateway device (19) of at least one vehicle-external domain (16) tool messages (21), which describe a current situation taking place in the respective domain (16), and tool messages (21) from a motor vehicle (1),
- a storage device (32) which is configured to provide at least one context rule (23) defined by a user (26) by means of an operating device (25) and/or at least one automatically-generated context rule (23), wherein each context rule specifies at least one respective predetermined control instruction (22) for a respectively predetermined function component (5, 17) of one of the domains (14, 16), for the case that at least one predetermined tool message (21, 21') is received by the control device (11, 11') or is itself determined by means of an own aggregation instruction (24') based on at least one received tool message (21), and
- a monitoring device (30) which is configured to control on the basis of the at least one context rule (23) the function components (5, 17) specified in the respective context rule (23),
**characterised in that**
the control device (11, 11') is configured to generate at least one of the tool messages (21, 21') based on at least one other tool message (21, 21'), in order to achieve an abstracting or detailing of a situation description.

11. Control device (11, 11') according to claim 10, wherein the control device (11, 11') is configured to receive the at least one tool message (21, 21') which was generated by combining sensor data (30) of several function components (5, 17) in one of the respective domains (14, 16).

12. Motor vehicle (1) having a control device (11') according to claim 10 or 11 and having at least one function component (5), wherein the at least one function component (5) is coupled with the control device (11'), in order to receive control instructions (22) from the control device (11').

## Revendications

1. Procédé destiné à coordonner un fonctionnement d'au moins un élément fonctionnel (5) dans un véhicule automobile (1) avec un fonctionnement d'un autre élément fonctionnel (5) du véhicule automobile (1) et/ou avec un fonctionnement d'au moins un élément fonctionnel (17) extérieur au véhicule,
dans lequel
- les au moins un éléments fonctionnels (5) dans le véhicule automobile (1) sont réunis en un domaine (14) propre au véhicule et les au moins un éléments fonctionnels (17) extérieurs au véhicule sont réunis en au moins un domaine (16) extérieur au véhicule, et
- pour chaque domaine sont produits des messages contextuels (21, 21'), chaque message contextuel (21, 21') décrivant une situation actuelle existant dans les domaines (14, 16) et chaque message contextuel (21, 21') étant produit selon une instruction d'agrégation (24, 24') prédéterminée respective à partir de données de capteur (30) et/ou données d'état (30) respectives d'au moins un élément fonctionnel (5, 17) du domaine (14, 16) et/ou à partir d'au moins un autre message contextuel (21, 21'), et
- une mémoire (32) d'un dispositif de commande (11, 11') fournit au moins une règle contextuelle (23) produite de manière automatisée et/ou définie par un utilisateur (26) au moyen d'un appareil de commande (25), chaque règle contextuelle (23) prévoyant au moins une instruction de commande (22) prédéterminée respective pour un élément fonctionnel (5, 17) respectivement prédéterminé d'un des domaines (14, 16) pour le cas où au moins un message contextuel (21, 21') prédéterminé est reçu par le dispositif de commande ou est déterminé au moyen d'une instruction d'agrégation (24') particulière à l'aide d'au moins un message contextuel (21) reçu, et
- un appareil de surveillance (30) du dispositif de commande (11, 11') commande sur la base de l'au moins une règle contextuelle (23) l'élément fonctionnel (5, 17) respectivement indiqué dans la règle contextuelle (23),
**caractérisé en ce que**
- les domaines (14, 16) comportent à chaque fois une passerelle (7, 19) et émettent par l'intermédiaire de leur passerelle (7, 19) respective leurs messages contextuels (21) en direction du dispositif de commande (11, 11'), et dans lequel au moins l'un des messages contextuels (21, 21') est produit selon une instruction d'agrégation (24, 24') prédéterminée respective par réunion de données de capteur (30) de plusieurs éléments fonctionnels (5, 17) du domaine (14, 16) respectif et/ou en se basant sur au moins un autre message contextuel (21, 21') afin d'atteindre une description de situation plus abstraite ou plus détaillée.

2. Procédé selon la revendication 1, dans lequel l'au moins un élément fonctionnel (5) du domaine (14) propre au véhicule comprend au moins l'un des éléments suivants : un système d'infoloisirs, un système de commande de siège, en particulier avec un moteur pour régler une position de siège et/ou un élément chauffant, un appareil de climatisation et/ou d'aération, un appareil d'éclairage, un appareil de localisation, un appareil de navigation.

3. Procédé selon l'une quelconque des revendications précédentes, dans lequel l'au moins un domaine (16) extérieur au véhicule comprend comme domaine (16) respectif :
- un réseau d'appareils d'un bâtiment (3) qui comporte au moins un appareil électroménager comme élément fonctionnel (17), et/ou
- un terminal mobile, portable (2) qui comporte au moins un programme d'application comme élément fonctionnel (17), et/ou
- une zone internet (15) qui comporte au moins un service internet comme élément fonctionnel (17).

4. Procédé selon l'une quelconque des revendications précédentes, dans lequel, avant l'émission, chaque passerelle (7, 19) de chaque domaine (14, 16) transforme les messages contextuels (21) en provenance du domaine (14, 16) respectif dans un format de message prédéterminé.

5. Procédé selon l'une quelconque des revendications précédentes, dans lequel les instructions d'agrégation (24, 24') sont exécutées à chaque fois par la passerelle (7, 19) et/ou par l'au moins un élément fonctionnel (5, 17) du domaine (14, 16) et/ou par le dispositif de commande (11, 11').

6. Procédé selon l'une quelconque des revendications précédentes, dans lequel le dispositif de commande (11) est fourni par un serveur (12) extérieur au véhicule et la passerelle (7) du domaine (14) propre au véhicule émet des messages contextuels (21) en provenance du domaine (14) en direction du dispositif de commande (11).

7. Procédé selon l'une quelconque des revendications 1 à 5, dans lequel le dispositif de commande (11') est fourni de manière interne au véhicule.

8. Procédé selon l'une quelconque des revendications précédentes, dans lequel chaque règle contextuelle (23) comporte à chaque fois une partie condition (33) et une partie action (36), dans lequel la partie condition (33) décrit l'au moins un message contextuel (21, 21') et la partie action (36) décrit l'au moins une instruction de commande (22) et dans lequel la partie condition (33) et la partie action (36) sont combinées en une règle si-alors.

9. Procédé selon l'une quelconque des revendications précédentes, dans lequel les règles contextuelles (23) sont configurées et/ou ajoutées et/ou effacées pendant un fonctionnement du véhicule automobile (1).

10. Dispositif de commande (11, 11') destiné à commander au moins un élément fonctionnel (5, 17) sur la base d'au moins une règle contextuelle (23), comportant :
- un appareil récepteur qui est conçu pour recevoir d'une passerelle (19) respective d'au moins un domaine (16) extérieur au véhicule des messages contextuels (21) qui décrivent une situation actuelle existant dans le domaine (16) respectif et des messages contextuels (21) en provenance d'un véhicule automobile (1),
- une mémoire (32) qui est conçue pour conserver au moins une règle contextuelle (23) définie par un utilisateur (26) au moyen d'un appareil de commande (25) et/ou produite de manière automatisée, chaque règle contextuelle (23) prévoyant au moins au moins une instruction de commande (22) prédéterminée respective pour un élément fonctionnel (5, 17) respectivement prédéterminé d'un des domaines (14, 16) pour le cas où au moins un message contextuel (21, 21') prédéterminé est reçu par le dispositif de commande (11, 11') ou est déterminé au moyen d'une instruction d'agrégation (24') particulière à l'aide d'au moins un message contextuel (21) reçu, et
- un appareil de surveillance (30) qui est conçu pour commander sur la base de l'au moins une règle contextuelle (23) l'élément fonctionnel (5, 17) indiqué dans la règle contextuelle (23) respective,
**caractérisé en ce que**
le dispositif de commande (11, 11') est conçu pour produire au moins l'un des messages contextuels (21, 21') en se basant sur au moins un autre message contextuel (21, 21') afin d'atteindre une description de situation plus abstraite ou plus détaillée.

11. Dispositif de commande (11, 11') selon la revendication 10, dans lequel le dispositif de commande (11, 11') est conçu pour recevoir l'au moins un message contextuel (21, 21') qui a été produit par réunion de données de capteur (30) de plusieurs éléments fonctionnels (5, 17) dans l'un des domaines (14, 16) respectifs.

12. Véhicule automobile (1) avec un dispositif de commande (11') selon la revendication 10 ou 11 et avec au moins un élément fonctionnel (5), dans lequel l'au moins un élément fonctionnel (5) est couplé au dispositif de commande (11') afin de recevoir des instructions de commande (22) en provenance du dispositif de commande (11').
